# EUROPEAN PATENT APPLICATION

(11) **EP 0 759 522 A1**
(43) Date of publication of application: **26.02.1997**
(21) Application number: 95118460.5
(22) Date of filing: 23.11.1995
(51) Int. Cl.: F16K 31/00, G05D 23/13

(54) **Thermostat-controlled automatic hot and cold water mixer**

(30) Priority: 22.08.1995 IT MI950595 U
(71) Applicant: O.M.B.G. S.r.l., 28010 Bolzano Novarese (Novara) (IT)
(72) Inventor: Boccalerio, Remo, I-28010 Bolzano Novarese (Novara) (IT)
(74) Representative: Modiano, Guido, Dr.-Ing.

(57) **Abstract**

A thermostat-controlled automatic hot and cold water mixer (1), which comprises a body (2) that internally forms a substantially cylindrical cavity (3) that is connected to two supply ducts (4,5), respectively for cold water and for hot water, and to a discharge duct (6) for the mixed water. A thermostatic cartridge (7) is accommodated in the cavity and comprises a supporting body (8-10) made of a resin that is adapted to prevent the formation of scale deposits.

## Description

The present invention relates to a thermostat-controlled automatic hot and cold water mixer.

Conventional hot and cold water mixers comprise an elongation-based heat regulator that acts on a movable element for the controlled opening of two inlets that are connected to supply ducts. The heat regulator is normally inserted in a cartridge and is connected to regulator means to achieve pre-positioning of the movable element according to the desired temperature of the mixed water.

The problem that is most strongly encountered in the manufacture of mixers is that of the formation of deposits on the regulator means, especially in the presence of particularly hard water.

Several solutions to this problem have been proposed; these include, in particular, a device in which water stagnation is avoided, consequently limiting the formation of scale deposits.

However, the need has been observed to further improve the performance of these mixers, especially in the presence of particularly scale-rich water.

A principal aim of the present invention is to provide a thermostatic cartridge that is capable of avoiding or at least significantly reducing the formation of deposits.

An object of the invention is to provide a cartridge that can be used in various kinds of mixer.

Another object is to provide a cartridge that is constructively simple and cheap.

According to the invention, there is provided a thermostat-controlled automatic hot and cold water mixer, which comprises a body that internally forms a substantially cylindrical cavity that is connected to two supply ducts, respectively for cold water and for hot water, and to a discharge duct for the mixed water. A thermostatic cartridge is adapted for being accommodated in the cylindrical cavity, and the cartridge comprises a supporting body that is made of a plastic resin that is adapted to prevent the formation of scale deposits on the body of the cartridge.

The particular characteristics and advantages of the invention will become apparent from the following detailed description of one preferred embodiment of a mixer according to the invention, described herein and illustrated in the accompanying drawings only by way of non-limitative example, wherein:
figure 1 is an exploded top view of the preferred embodiment of the mixer according to the invention;
figure 2 is a partially sectional top view of the mixer of the figure 1, applied to a wall;
figure 3 is a side view of the mixer of figure 2;
figure 4 is an exploded view of a thermostatic cartridge of the mixer of the previous figures; and
figure 5 is an enlarged-scale exploded view of the containment body of the thermostatic cartridge of the previous figures.

With reference to the above figures, one particular preferred embodiment of a thermostat-controlled automatic hot and cold water mixer according to the invention, generally designated by the reference numeral 1, comprises a body 2 that internally forms a substantially cylindrical cavity 3 that is connected to or in communication with two supply ducts, respectively 4 for the cold water and 5 for the hot water, and to or with a discharge duct 6 for the mixed water.

A thermostatic cartridge, generally designated by the reference numeral 7, is accommodated in the cavity 3 and comprises a supporting body that is preferably constituted by an upper element 8, a lower element 9, and a flange 10.

According to the invention, the supporting body, which is preferably constituted by the upper element 8, by the lower element 9, and by the flange 10, is made of a synthetic material that is adapted to prevent the scale from adhering thereto. Advantageously, the synthetic material is preferably chosen among a plastic resin, more particularly an amorphous resin, for example PEI (polyether imide) of the type known commercially as ULTEM 1000, produced by General Electric.

An elongation-based heat regulator 11 acts on a movable element 12 for the controlled opening of the hot and cold water inlets, and regulator means act on the movable element 12 to pre-position the heat regulator according to the desired temperature of the mixed water.

The regulator means comprise a graduated knob 23 that is rigidly coupled to a set screw 14 that engages in a spring holder 15, which accommodates an excess-stroke spring 16 and a bottom plate 17. A spring 18 for the distribution unit is furthermore interposed between the heat regulator 11 and the spring holder 15 and acts by contrasting the elongation of said heat regulator.

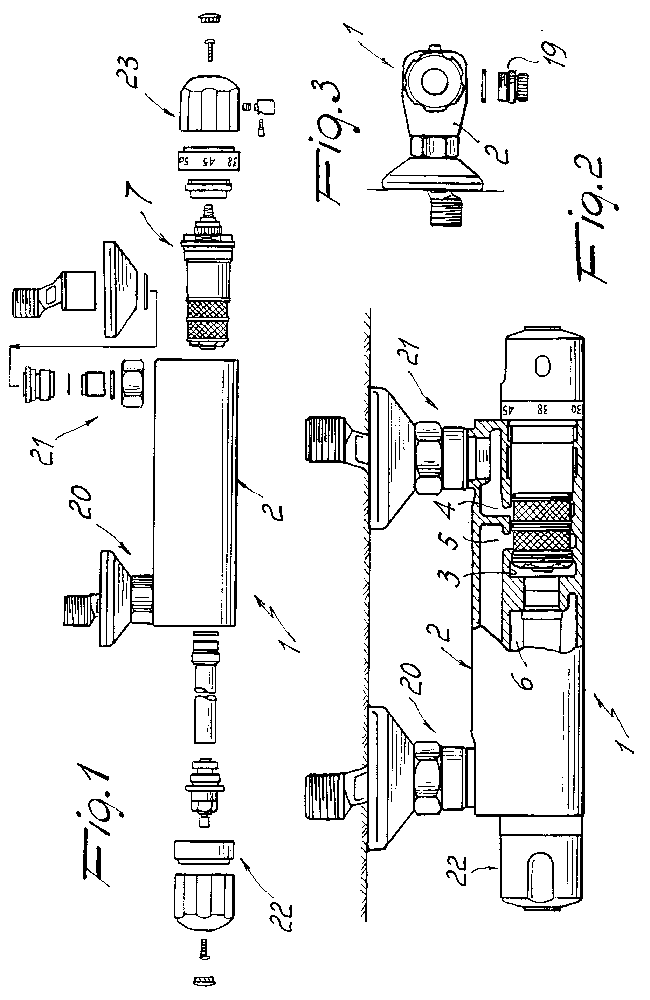

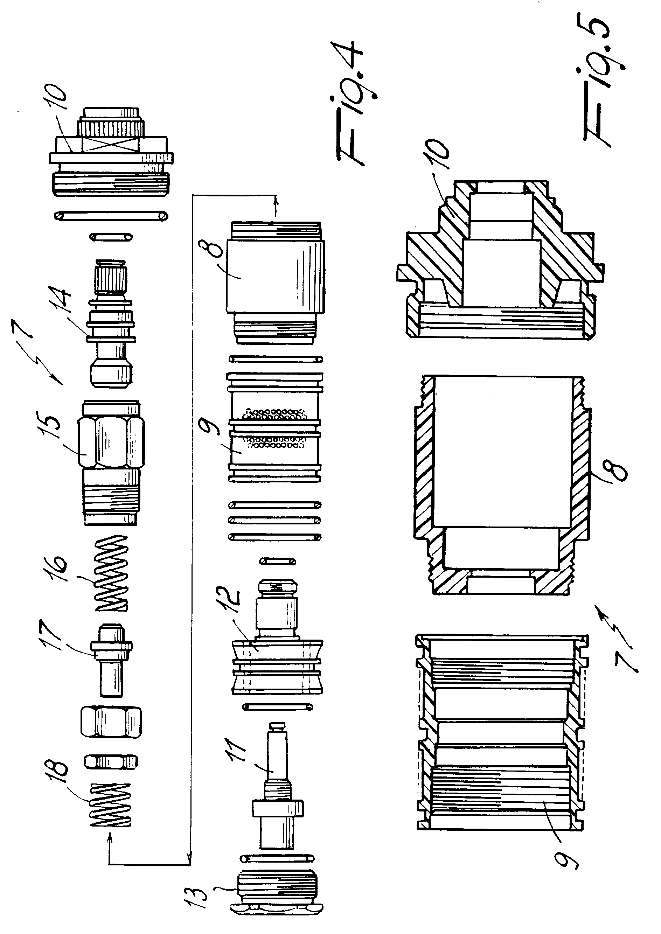

The mixer, which comprises a valve for controlling the flow by means of a knob 22, can be advantageously applied conventionally to a wall, as shown in figure 2, by means of the ducts 20 and 21.

In practice it has been observed that the invention achieves the intended aim and objects, a mixer having been provided in which the formation of scale deposits is considerably reduced by virtue of the particular nature of the body of the cartridge.

The materials employed, as well as the dimensions, may of course be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Thermostat-controlled automatic hot and cold water mixer (1), comprising a body (2) that internally forms a substantially cylindrical cavity (3) that is connected to two supply ducts (4,5), respectively for cold water and for hot water, and to a discharge duct (6) for the mixed water, a thermostatic cartridge (7) being accommodated in said cavity, the mixer being characterized in that said cartridge comprises a supporting body (8-10) that is made of a plastic resin that is adapted to prevent the formation of scale deposits on the body of said cartridge.

2. Mixer according to claim 1, characterized in that said plastic resin is an amorphous resin.

3. Mixer according to claim 2, characterized in that said amorphous resin is polyether imide.

4. Mixer according to one or more of the preceding claims, characterized in that said supporting body of said cartridge is constituted by an upper element (8), a lower element (9), and a flange (10).
